# EUROPEAN PATENT SPECIFICATION

(11) **EP 0 399 608 B1**
(45) Date of publication and mention of the grant of the patent: **10.08.1994**
(21) Application number: 90201282.2
(22) Date of filing: 21.05.1990
(51) Int. Cl.: B01D 53/14

(54) **Process for removing acid gas from a gas mixture containing acid gas**
Verfahren zum Entfernen von saurem Gas aus einer Gasmischung
Procédé d'élimination de gaz acide d'une mélange de gaz

(30) Priority: 26.05.1989 CA 600759
(43) Date of publication of application: 28.11.1990
(73) Proprietor: SHELL INTERNATIONALE RESEARCH MAATSCHAPPIJ B.V., 2596 HR Den Haag (NL)
(72) Inventor: Chopra, Vijay Kumar, Calgary, Alberta T2 H2 N7 (CA); Kaija, Steven Paul, Calgary, Alberta (CA)

(56) References cited:
- WO-A- /82579
- US-A- 4 080 424
- US-A- 4 138 230

## Description

The present invention relates to process for removing acid gas from a gas mixture containing acid gas, in particular to a process for removing acid gas from a gas mixture at elevated pressure (above 10 bar) containing more than 10 %v (per cent by volume) of hydrogen sulphide. The gas mixture can further contain carbon dioxide.

A known process for removing acid gas from a gas mixture containing acid gas comprises contacting the gas mixture in an absorber at elevated pressure with absorbent to produce purified gas and loaded absorbent and regenerating loaded absorbent to produce lean absorbent and a gas enriched in hydrogen sulphide, wherein regenerating loaded absorbent includes totally regenerating loaded absorbent by stripping the loaded absorbent with an inert gas such as steam at about atmospheric pressure.

The gas enriched in hydrogen sulphide is supplied to a sulphur recovery plant where hydrogen sulphide is converted to elemental sulphur yielding an off-gas containing sulphur compounds and removing the elemental sulphur from the sulphur recovery plant.

In the sulphur recovery plant hydrogen sulphide is converted to elemental sulphur according to the so-called Claus process, in which process part of the hydrogen sulphide is oxidized to sulphur dioxide in the thermal stage and the reaction between the remainder of the hydrogen sulphide and the formed sulphur dioxide is allowed to proceed in the catalytic stage. In such a plant about 95% by mass of the hydrogen sulphide is converted to elemental sulphur, the remainder exits the sulphur recovery plant in the off-gas as sulphur compounds such as sulphur dioxide.

To remove sulphur compounds from the off-gas, the known process comprises the further steps of reducing the sulphur compounds other than hydrogen sulphide in the off-gas to hydrogen sulphide to produce reduced off-gas; contacting the reduced off-gas in a secondary absorber at substantially atmospheric pressure with lean absorbent to produce sulphur-free gas and loaded absorbent; and regenerating the loaded absorbent to produce lean absorbent and a gas enriched in hydrogen sulphide which is supplied to the sulphur recovery plant. These further steps are sometimes referred to as sulphur recovery plant off-gas treating process, or Claus off-gas treating process.

It is an object of the present invention to provide process that can be used to treat gas mixtures with different acid gas contents, and that can easily handle large variations of the volumetric flow rate of the gas mixture supplied to the first absorber.

It is a further object of the invention to provide a process for deep removal of the acid gas, to wit the amount of hydrogen sulphide in the purified gas has to be below 10 ppmv (part per million by volume).

To these ends the process for removing acid gas from a gas mixture containing acid gas according to the present invention comprises the steps of
a) contacting the gas mixture in a first absorber at elevated pressure with a first absorbent to produce treated gas and loaded first absorbent and regenerating loaded first absorbent to produce regenerated first absorbent and a gas enriched in hydrogen sulphide;
b) contacting the treated gas from step a) in an auxiliary absorber at elevated pressure with auxiliary absorbent to produce purified gas and loaded auxiliary absorbent and regenerating loaded auxiliary absorbent to produce regenerated auxiliary absorbent and a gas enriched in hydrogen sulphide;
c) supplying gas enriched in hydrogen sulphide from step a) and step b) to a sulphur recovery plant where hydrogen sulphide is converted to elemental sulphur yielding an off-gas containing sulphur compounds and removing the elemental sulphur from the sulphur recovery plant;
d) reducing sulphur compounds other than hydrogen sulphide in the off-gas to hydrogen sulphide to produce reduced off-gas;
e) contacting the reduced off-gas from step d) in a secondary absorber at substantially atmospheric pressure with regenerated first absorbent from step a) to produce sulphur-free gas and partly loaded first absorbent; and
f) supplying partly loaded first absorbent to the first absorber for use in the contacting of step a).

Carrying out contacting the gas mixture which contains the acid gas in two separate stages facilitates a more flexible operation as the bulk of the acid gas is removed in the first absorber and deep removal is done in the auxiliary absorber; if the rate of the supplied gas mixture decreases or if the content of acid gas in the gas mixture decreases, the auxiliary absorber can be bypassed. In addition, for bulk removal "used absorbent" can be used; a very convenient source for the "used absorbent" is the absorbent from the secondary absorber, of which absorbent a large amount is available with a relatively small hydrogen sulphide content.

The invention will now be described in more detail by way of example with reference to the accompanying Figure showing a flowscheme of the process according to the present invention.

A natural gas mixture including hydrogen sulphide and carbon dioxide is supplied through conduit 1 to first absorber 3. In the first absorber 3 the gas mixture is countercurrently contacted at elevated pressure with first absorbent supplied to the first absorber 3 through conduit 4 to obtain treated gas mixture and a loaded absorbent. The treated gas mixture leaves the first absorber 3 through conduit 6, and loaded absorbent leaves through conduit 9. The temperatures and pressures pertaining to absorption are between 0 and 90 °C and between 10 and 75 bar, respectively.

Loaded absorbent passes through conduit 9 which is provided with a pressure reducing valve (not shown). At reduced pressure absorbent is introduced into separation vessel 13, and loaded absorbent from which gas has desorbed leaves the separation vessel 13 as partly regenerated absorbent through conduit 14, and desorbed gas is contacted in contactor 15 with first absorbent supplied through conduit 17 to remove the desorbed hydrogen sulphide from the gas. After contacting the gas leaves the contactor 15 through conduit 19.

Partly regenerated absorbent is passed through conduit 14 to regenerator 20. In the regenerator 20 the absorbent is totally regenerated by stripping with steam which is obtained by reboiling part of the absorbent in reboiler 21 and introducing heated steam-containing fluid in the bottom part of the regenerator 20. The temperatures and pressures pertaining to regenerating an absorbent are known as such and are not relevant to the invention.

Gas enriched in hydrogen sulphide leaves the regenerator through conduit 22. If required the condensate can be separated from the gas by partly condensing the gas (not shown).

Treated gas mixture is passed through conduit 6 to auxiliary absorber 30, in which the gas is contacted with auxiliary absorbent supplied to the auxiliary absorber 30 through conduit 34 to obtain purified gas mixture and loaded auxiliary absorbent. The purified gas mixture leaves through conduit 36, and loaded auxiliary absorbent through conduit 39. The temperatures and pressures pertaining to absorption are between 0 and 90 °C and between 10 and 75 bar, respectively.

Loaded auxiliary absorbent passes through conduit 39 which is provided with a pressure reducing valve (not shown). At reduced pressure absorbent is introduced into separation vessel 43, auxiliary absorbent from which gas has desorbed is removed as partly regenerated absorbent through conduit 44, and desorbed gas is contacted in contactor 45 with auxiliary absorbent supplied through conduit 47 to remove the desorbed hydrogen sulphide from the gas. After contacting the gas leaves the contactor 45 through conduit 49.

Partly regenerated absorbent is passed through conduit 44 to regenerator 50. In the regenerator 50 the absorbent is totally regenerated by stripping with steam which is obtained by reboiling part of the absorbent in reboiler 51 and introducing heated steam-containing fluid in the bottom part of the regenerator 50. The temperatures and pressures pertaining to regenerating an absorbent are known as such and are not relevant to the invention.

Gas enriched in hydrogen sulphide leaves the regenerator through conduit 52. If required the condensate can be separated from the gas by partly condensing the gas (not shown), and regenerated auxiliary absorbent leaves the regenerator 50 through conduit 53 and is passed to conduits 34 and 47.

Gas enriched in hydrogen sulphide is passed through conduits 22 and 52 to sulphur recovery plant 55.

In the sulphur recovery plant 55 elemental sulphur is produced according to the following two reactions:

2H₂S + 3O₂ ↔ 2H₂O + 2SO₂, and

4H₂S + 2SO₂ ↔ 4H₂O + 6S.

The reactions are carried out in the presence of a suitable catalyst and at suitable conditions which are well known as such and not relevant to the present invention. Elemental sulphur leaves the sulphur recovery plant through conduit 57 and plant-off gas through conduit 58. Since the reactions are equilibrium reactions the plant off-gas contains hydrogen sulphide and sulphur dioxide, in addition the plant-off gas can contain organic sulphur compounds. To remove sulphur compounds from the plant off-gas, this gas is further treated.

To this end the plant off-gas is supplied through conduit 58 to reduction reactor 60. In the reduction reactor 60 the plant off-gas is catalytically treated in the presence of a reducing gas such as hydrogen and/or carbon monoxide in order to convert sulphur compounds other than hydrogen sulphide, for example sulphur dioxide, to hydrogen sulphide to obtain reduced off-gas. The catalysts used and the conditions in which the reduction is carried out are known as such an not relevant to the present invention.

Reduced plant off-gas is passed through conduit 61 to secondary absorber 65 where hydrogen sulphide is selectively removed from it. In the secondary absorber 65 reduced plant off-gas is countercurrently contacted at atmospheric pressure with regenerated first absorbent supplied to the secondary absorber 3 through conduit 67 to obtain treated gas and a used first absorbent. The treated gas leaves the secondary absorber through conduit 69, and partly loaded first absorbent leaves through conduit 70. This absorbent is supplied to conduit 17, and to conduit 4 for use in the first absorber.

The amount of hydrogen sulphide that can be absorbed in an absorbent increases with the partial pressure of the hydrogen sulphide. Thus to remove an amount of hydrogen sulphide at a low partial pressure a larger amount of absorbent is required than to remove this amount of hydrogen sulphide at a higher partial pressure. As the partial pressure of hydrogen sulphide in the reduced off-gas is very small the amount of first absorbent to treat reduced plant off-gas should high.

Using in the first absorber this partly loaded first absorbent or "used absorbent" therefore reduces the amount of absorbent which is circulating. As regenerating loaded absorbent requires an amount of heat which is proportional to the amount of absorbent to be regenerated in the process according to the invention the amount of heat required to regenerate the absorbent is thus reduced as well.

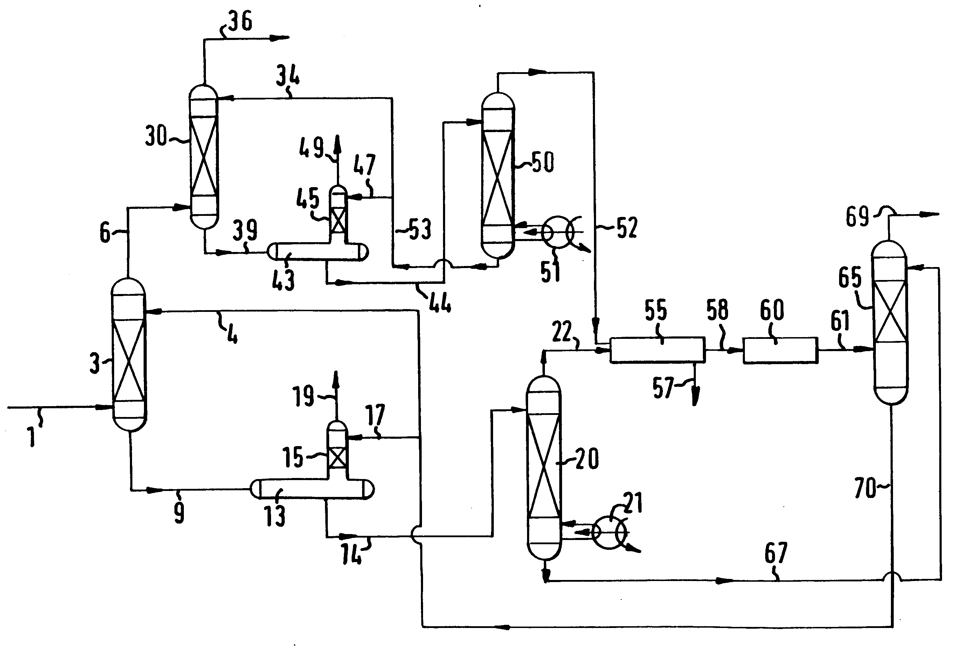

In the flowscheme as shown in Figure 1 all partly loaded first absorbent is used for removing acid gas from the gas mixture and from the desorbing gas, however, if the amount of gas mixture supplied to the first absorber 1 decreases, part of the partly loaded first absorbent can be supplied directly to the regenerator 20.

In the process according to the invention the first absorbent and the auxiliary absorbent are aqueous solutions of at least one amine compound, and the auxiliary absorbent can further contain a physical absorbent such as sulfolane. Suitably the amine compound used for the first absorbent and for the auxiliary absorbent is a primary amine (such as monoethanol amine) or a secondary amine (such as diisopropanol amine).

In an alternative embodiment, the first absorbent is an aqueous solution of a tertiary amine (such as methyl diethanol amine, triethanol amine or diethyl monoethanol amine) and the auxiliary absorbent is an aqueous solution of at least one amine compound selected from the group of primary amines (such as monoethanol amine) and secondary amines (such as diisopropanol amine). The auxiliary absorbent can further contain a physical absorbent such as sulfolane.

Contacting can be carried out countercurrently in a column provided with trays or packing or concurrently in a packed column.

## Claims

1. Process for removing acid gas from a gas mixture containing acid gas comprising the steps of
a) contacting the gas mixture in a first absorber at elevated pressure with a first absorbent to produce treated gas and loaded first absorbent, and regenerating loaded first absorbent to produce regenerated first absorbent and a gas enriched in hydrogen sulphide;
b) contacting the treated gas from step a) in an auxiliary absorber at elevated pressure with auxiliary absorbent to produce purified gas and loaded auxiliary absorbent, and regenerating loaded auxiliary absorbent to produce regenerated auxiliary absorbent which is supplied to the auxiliary absorber and a gas enriched in hydrogen sulphide;
c) supplying gas enriched in hydrogen sulphide from step a) and step b) to a sulphur recovery plant and converting the hydrogen sulphide to elemental sulphur yielding an off-gas containing sulphur compounds and removing the elemental sulphur from the sulphur recovery plant;
d) reducing the sulphur compounds other than hydrogen sulphide in the off-gas to hydrogen sulphide to produce reduced off-gas;
e) contacting the reduced off-gas from step d) in a secondary absorber at substantially atmospheric pressure with regenerated first absorbent from step a) to produce sulphur-free gas and partly loaded first absorbent; and
f) supplying partly loaded first absorbent to the first absorber for use in the contacting of step a).

2. Process as claimed in claim 1, wherein regenerating first loaded absorbent comprises reducing the pressure in the loaded absorbent and separating gas desorbing from the absorbent to produce semi regenerated absorbent and subsequently totally regenerating the semi regenerated absorbent.

3. Process as claimed in claim 2, wherein the desorbing gas is contacted with absorbent.

4. Process as claimed in any one of the claims 1-3, wherein regenerating loaded auxiliary absorbent comprises reducing the pressure in the loaded absorbent and separating desorbing gas from the absorbent to produce semi regenerated absorbent and subsequently totally regenerating the semi regenerated absorbent.

5. Process as claimed in claim 4, wherein the desorbing gas is contacted with absorbent.

6. Process as claimed in any one of the claims 1-5, wherein the first absorbent and the auxiliary absorbent are aqueous solutions of at least one amine compound.

7. Process as claimed in claim 6, wherein the auxiliary absorbent further contains a physical absorbent.

8. Process as claimed in claim 6, wherein the amine compound is a primary or a secondary amine.

9. Process as claimed in any one of the claims 1-5, wherein the first absorbent is an aqueous solution of a tertiary amine and wherein the auxiliary absorbent is an aqueous solution of at least one amine compound selected from the group of primary and secondary amines.

10. Process as claimed in claim 9, wherein the auxiliary absorbent further contains a physical absorbent.

## Patentansprüche

1. Verfahren zum Entfernen von saurem Gas aus einer Gasmischung, enthaltend saures Gas, welches die folgenden Verfahrensschritte umfaßt:
a) Kontaktieren der Gasmischung in einem ersten Absorber bei erhöhtem Druck mit einem ersten Absorptionsmittel zwecks Herstellung von behandeltem Gas und einem beladenen ersten Absorptionsmittel und Regenerieren des beladenen ersten Absorptionsmittel zwecks Herstellung des regenerierten ersten Absorptionsmittels und eines an Schwefelwasserstoff angereicherten Gases;
b) Kontaktieren des behandelten Gases aus Stufe a) in einem Hilfsabsorber bei erhöhtem Druck mit einem Hilfs-Absorptionsmittel zwecks Herstellung von gereinigtem Gas und beladenem Hilfs-Absorptionsmittel und Regenerieren des beladenen Hilfs-Absorptionsmittels zwecks Herstellung des regenerierten Hilfs-Absorptionsmittel und eines an Schwefelwasserstoff angereicherten Gases;
c) Überführen des an Schwefelwasserstoff angereicherten Gases aus Stufen a) und b) in eine Schwefelwiedergewinnungsanlage, in welcher Schwefelwasserstoff in elementaren Schwefel unter Bildung eines Abgases, enthaltend Schwefelverbindungen, umgewandelt wird, und Entfernen des elementaren Schwefels aus der Schwefelwiedergewinnungsanlage;
d) Reduzieren der Schwefelverbindungen- außer Schwefelwasserstoff- im Abgas zu Schwefelwasserstoff zwecks Erhalt von reduziertem Abgas;
e) Kontaktieren des reduzierten Abgases von Stufe d) in einem zweiten Absorber bei im wesentlichen atmosphärischem Druck mit regeneriertem ersten Absorptionsmittel aus Stufe a) zwecks Herstellung von schwefelfreiem Gas und teilweise beladenem erstem Absorptionsmittel; und
f) Einführen des teilweise beladenen ersten Absorptionsmittels in den ersten Absorber zwecks Verwendung beim Kontaktieren in der Stufe a).

2. Verfahren, wie in Anspruch 1 beansprucht, in welchem das Regenerieren des ersten beladenen Absorptionsmittels das Reduzieren des Drucks in dem beladenen Absorptionsmittel und das Abtrennen des aus dem Absorptionsmittel desorbierenden Gases, um ein halb-regeneriertes Absorptionsmittel zu erhalten, und anschließend das Gesamtregenerieren des halb-regenerierten Absorptionsmittels umfaßt.

3. Verfahren, wie in Anspruch 2 beansprucht, in welchem das desorbierende Gas mit Absorptionsmittel kontaktiert wird.

4. Verfahren, wie in einem der Ansprüche 1 bis 3 beansprucht, in welchem das Regenerieren des beladenen Hilfsabsorptionsmittels das Reduzieren des Drucks in dem beladenen Absorptionsmittel und das Abtrennen des desorbierenden Gases aus dem Absorptionsmittel zur Herstellung von halb-regeneriertem Absorptionsmittel und anschließend das Gesamtregenerieren des halbregenerierten Absorptionsmittels umfaßt.

5. Verfahren, wie in Anspruch 4 beansprucht, in welchem das desorbierende Gas mit Absorptionsmittel kontaktiert wird.

6. Verfahren, wie in einem der Ansprüche 1 bis 5 beansprucht, in welchem das erste Absorptionsmittel und das Hilfsabsorptionsmittel wäßrige Lösungen mindestens einer Aminverbindung sind.

7. Verfahren, wie in Anspruch 6 beansprucht, in welchem das Hilfsabsorptionsmittel ferner ein physikalisches Absorptionsmittel umfaßt.

8. Verfahren, wie in Anspruch 6 beansprucht, in welchem die Aminverbindung ein primäres oder sekundäres Amin ist.

9. Verfahren, wie in einem der Ansprüche 1 bis 5 beansprucht, in welchem das erste Absorptionsmittel eine wäßrige Lösung eines tertiären Amins ist und in welchem das Hilfsabsorptionsmittel eine wäßrige Lösung mindestens einer Aminverbindung, ausgewählt aus der Gruppe von primären und sekundären Aminen, ist.

10. Verfahren, wie in Anspruch 9 beansprucht, in welchem das Hilfsabsorptionsmittel ferner ein physikalisches Absorptionsmittel enthält.

## Revendications

1. Procédé pour l'élimination d'un gaz acide d'un mélange de gaz renfermant le gaz acide, comportant les étapes à :
a) mettre en contact le mélange de gaz dans un premier absorbeur sous une pression élevée avec un premier agent absorbant afin d'obtenir un gaz traité et un premier agent absorbant chargé, et à regénérer le premier agent absorbant chargé afin d'obtenir un premier agent absorbant régénéré et un gaz enrichi en sulfure d'hydrogène ;
b) mettre en contact le gaz traité provenant de l'étape a) dans un absorbeur auxiliaire à température élevée avec un agent absorbant auxiliaire afin d'obtenir un gaz purifié et un agent absorbant auxiliaire chargé, et à regénérer l'agent absorbant auxiliaire chargé afin d'obtenir un agent absorbant auxiliaire régénéré qui est transféré au premier absorbeur auxiliaire et un gaz enrichi en sulfure d'hydrogène ;
c) alimenter du gaz enrichi en sulfure d'hydrogène provenant de l'étape a) et de l'étape b) dans une unité de récupération du soufre et à convertir le sulfure d'hydrogène en soufre élémentaire pour obtenir un gaz résiduel renfermant des composés du soufre et à éliminer le soufre élémentaire de l'installation de récupération du soufre ;
d) réduire les composés du soufre autres que le sulfure d'hydrogène
dans le gaz résiduel en sulfure d'hydrogène afin d'obtenir un gaz résiduel réduit ;
e) mettre en contact le gaz résiduel réduit provenant de l'étape d) dans un second absorbeur pratiquement à la pression atmosphérique avec le premier agent absorbant régénéré provenant de l'étape a) afin d'obtenir un gaz exempt de soufre et un premier agent absorbant partiellement chargé ; et
f) transférer le premier agent absorbant partiellement chargé au premier absorbeur, de façon à l'utiliser dans la phase de contact de l'étape a).

2. Procédé tel que revendiqué dans la revendication 1, dans lequel la régénération de premier agent absorbant chargé consiste à réduire la pression dans l'agent absorbant chargé et à séparer le gaz désorbant de l'agent absorbant afin d'obtenir un agent absorbant semi-regénéré et par la suite à regénérer totalement l'agent absorbant semi-regénéré.

3. Procédé tel que revendiqué dans la revendication 2, dans lequel le gaz désorbant est mis en contact avec l'agent absorbant.

4. Procédé tel que revendiqué dans l'une quelconque des revendications 1 à 3, dans lequel la régénération de l'absorbant auxiliaire chargé consiste à réduire la pression dans l'agent absorbant chargé et à séparer le gaz désorbant de l'agent absorbant afin d'obtenir un agent absorbant semi-regénéré et à regénérer totalement, par la suite, l'agent absorbant semi-regénéré.

5. Procédé tel que revendiqué dans la revendication 4, dans lequel le gaz désorbant est mis en contact avec un agent absorbant.

6. Procédé tel que revendiqué dans l'une quelconque des revendications 1 à 5, dans lequel le premier agent absorbant et l'agent absorbant auxiliaire sont des solutions aqueuses d'au moins un composé aminé.

7. Procédé tel que revendiqué dans la revendication 6, dans lequel l'agent absorbant auxiliaire renferme en outre un agent absorbant physique.

8. Procédé tel que revendiqué dans la revendication 6, dans lequel le composé aminé est une amine primaire ou une amine secondaire.

9. Procédé tel que revendiqué dans l'une quelconque des revendications 1 à 5, dans lequel le premier agent absorbant est une solution aqueuse d'une amine tertiaire et dans lequel l'agent absorbant auxiliaire est une solution aqueuse d'au moins un composé aminé choisi dans le groupe des amines primaires et secondaires.

10. Procédé tel que revendiqué dans la revendication 9, dans lequel l'agent absorbant auxiliaire renferme en outre un agent absorbant physique.
